# EUROPEAN PATENT SPECIFICATION

(11) **EP 0 606 125 B1**
(45) Date of publication and mention of the grant of the patent: **21.05.1997**
(21) Application number: 94200025.8
(22) Date of filing: 06.01.1994
(51) Int. Cl.: C08F 4/64, C08F 10/00, C07F 7/28, C08F 38/02

(54) **Use of titanium and zirconium compounds as homogeneous catalyst and novel titanium and zirconium compounds**
Verwendung von Titan- und Zirkonverbindungen als homogene Katalysator und neue Titan- und Zirkonverbindungen
Utilisation de composés de titane et de zircone comme catalyseurs homogènes et nouveaux composés de titane et de zircone

(30) Priority: 08.01.1993 EP 93200046
(43) Date of publication of application: 13.07.1994
(73) Proprietor: SHELL INTERNATIONALE RESEARCH MAATSCHAPPIJ B.V., 2596 HR Den Haag (NL)
(72) Inventor: Schaverien, Colin John, NL-1031 CM Amsterdam (NL); Van Der Linden, Adrianus Johannes, NL-1031 CM Amsterdam (NL)

(56) References cited:
- EP-A- 0 241 560
- EP-A- 0 358 103
- US-A- 4 452 914
- DATABASE WPI Section Ch, Week 8627, Derwent Publications Ltd., London, GB; Class E, AN 86-175704 & SU-A-1 198 052 (AS USSR BASHKIR CHE) 15 December 1985
- Journal of Magnetic Resonance 46, Academic Press, Inc., 1982, pages 535-539
- DATABASE WPI Section Ch, Week 8627, Derwent Publications Ltd., London, GB; Class E, AN 86-175704 & SU-A-1 198 052

## Description

The present invention relates to the use of titanium and zirconium compounds having chelating alkoxide ligands as homogeneous catalysts for olefin polymerization or oligomerization, including the cyclic trimerization of terminal acetylenes, and to novel titanium and zirconium compounds having chelating alkoxide ligands containing silyl groups.

From U.S. patent No. 4,452,914 a titanium complex or compound is known, which may be used as the transition metal component in Ziegler-Natta catalysts. Said titanium complex or compound is obtained by reacting a titanium compound of general formula Ti(OR)ₙX₄₋ₙ, wherein R represents a hydrocarbyl group of 1 to 20 carbon atoms, X represents a halogen and n is an integer having a value of 0 to 4, with at least one compound containing at least one hydroxyl group. This latter compound includes optionally substituted bisphenol compounds and optionally substituted binaphthol compounds, wherein two aromatic rings may be linked via a divalent bridging group, such as e.g. a hydrocarbyl group or a sulphur containing group. Said U.S. patent however, does not describe the presence of silyl groups as substituents on the aromatic rings of the compounds containing at least one hydroxyl group.

From European Patent Applications Nos. 0 241 560 and 0 433 943 a catalyst for polymerising and co-polymerising olefins, and for preparing 1,4-polybutadiene respectively is known. This catalyst comprises a transition metal compound, an organoaluminium compound and an organic compound having at least two hydroxyl groups. This organic compound may an optionally substituted bisphenol or binaphtol compound, wherein the aromatic rings containing the hydroxyl groups may be connected through a divalent bridging group, such as a hydrocarbyl group or a sulphur containing group. However, said European patent application is silent about the use as an olefin polymerization or oligomerization catalyst, while the presence of silyl substituents on the hydroxy containing aromatic rings is not disclosed either.

U.S. Patent No. 4,798,903 discloses optically active 3,3'-disilylbisnaphtol derivatives, which are useful as ligands. More specifically, said 3,3'-disilylbinaphtol derivatives are described to be useful for reacting with trialkyl aluminium, thus obtaining active aluminium reagents, which are useful as catalysts for the asymmetric hetero Diels-Alder reaction in the reactions between aldehydes and conjugated dienes. In general, the 3,3'-disilylbinaphtol compounds are described to be useful as ligands of optically active catalysts. However, their use as olefin polymerization or oligomerization catalysts is not described, while complexes with zirconium or titanium compounds are not described either. Hence, titanium and zirconium compounds having chelating 3,3'-disilylbinaphtol ligands were not known, nor was their use as homogeneous catalysts in the polymerization or oligomerization of olefinically unsaturated compounds as well as in the cyclic trimerization of terminal acetylenes.

It is an object of the present invention to provide improved homogeneous catalysts for the polymerization or oligomerization of olefinically unsaturated compounds and terminal acetylenes.

Accordingly, the present invention relates to compounds of the general formula 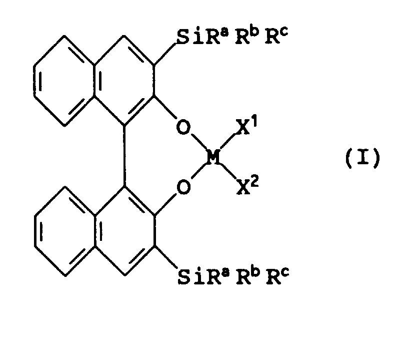 wherein:
- M is Ti or Zr;
- X¹ and X² independently represent halogen, an optionally substituted aliphatic or aromatic hydrocarbon group of 1 to 20 carbon atoms, a silyl group or an alkoxy group of general formula -OR' with R' being an aliphatic or aromatic hydrocarbon group of 1 to 20 carbon atoms; and
- R^{a}, R^{b} and R^{c} independently represent methyl, an aryl group, an arylalkyl group or an alkylaryl group, of which methyl and phenyl are preferred,
and to their use in the polymerisation or oligomerisation of olefinically or acetylenically unsaturated hydrocarbons.

In a preferred embodiment of the present invention X¹ and X² are the same and selected from the group consisting of halogen, alkylene trialkyl silyl, aryl, alkylaryl, arylalkyl and methyl, while from this group chlorine, benzyl, methylene trimethyl silyl and methyl are the most preferred members.

Preferred compounds are those of formula I wherein either R^{a}, R^{b} and R^{c} are selected from methyl and phenyl, or wherein M=Zr or Ti, R^{a}=R^{b}=R^{c}=independently methyl or phenyl and X¹=X²=Cl or benzyl, or methyl, or wherein M=Zr, R^{a}=R^{b}=R^{c}=phenyl and X¹=X²=methylene trimethyl silyl.

The said homogeneous catalysts are particularly useful in the polymerization or oligomerization of ethene, propene or hexene, while the best results are achieved in the polymerization or oligomerization of ethene. The term "olefinically unsaturated hydrocarbon" wherever used in this specification should be interpreted wide enough as to comprise both mono-unsaturated compounds as well as diolefinically unsaturated compounds. From the latter group of compounds 1,3-butadiene can be cited as example. The mono-olefins can have terminal unsaturation (alpha-olefins) or internal unsaturation as in e.g. 2-hexene or 3-hexene.

On the other hand, the said titanium and zirconium compounds may also be effectively used as homogeneous catalysts in the oligomerization of terminal acetylenes and more particularly in the cyclic trimerization of terminal acetylenes. Preferably, said acetylenes have the general formula (II) :

H-C≡C-R (II)

wherein R represents a hydrocarbyl silyl group, an optionally substituted aryl group or an alkyl group of 1 to 20 carbon atoms other than tertiary alkyl. In an even more preferred embodiment, said group R is selected from the group consisting of trimethyl silyl, phenyl and p-tolyl.

The polymerization or oligomerization is effected by methods known per se, it can be carried out in bulk, in solution, in slurry or in gasphase reaction. Usual temperatures will be in the range of from 95 to 150 °C, the pressure will normally range from 100 to 10000 kPa (1 to 100 bar), preferably from 300 to 7000 kPa (3 to 70 bar).

If chelating alkoxide titanium and zirconium compounds as described hereinbefore are used as homogeneous catalyst for the polymerization of olefins such as ethene and propene, a cocatalyst is required for activating the catalyst. In principle, any cocatalyst known in the art can be used, but it is preferred to use an organoalumium compound, such as diethylaluminium chloride or methylaluminoxane. The best results however, are obtained when using methylaluminoxane.

When used as catalyst in the cyclic trimerization of terminal acetylenes to yield benzenes, the catalyst needs no activation by means of a cocatalyst due to the presence of the terminal triple bond and the resulting acidic character of the terminal hydrogen atom in combination with the basic character of the bonding between the titanium or zirconium atom and the X¹ and X² group. This also explains why H-C≡C-tAlkyl and internal acetylenes do not undergo the cyclic trimerization reaction: H-C≡C-tAlkyls are only very weakly acidic, while internal acetylenes such as e.g. but-2-yne are not acidic at all due to the absence of an acidic hydrogen atom which is directly bonded to the C≡C entity. The cyclic trimerization reaction proceeds as follows: 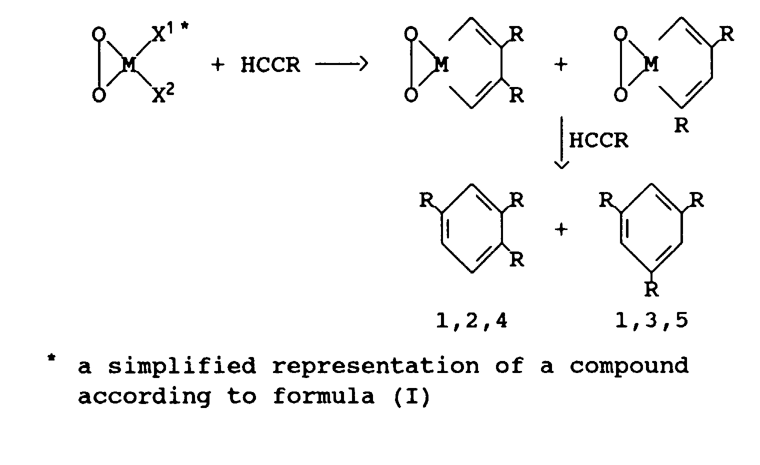 The symmetric 1,3,5-trisubstituted benzene is disfavoured for more bulkier binaphtol or bisphenol ligands, i.e. binaphtol and bisphenol ligands having bulky X¹ and X² groups. Consequently, the ratio of 1,2,4-trisubstituted benzene to its 1,3,5-isomer can be controlled by the nature of the X¹ and X² groups bonded to the metal atom.

The invention is further illustrated by the following examples, however without restricting the invention to these specific embodiments.

### Examples

All experiments for preparing the chelating alkoxide titanium and zirconium compounds were performed in an argon atmosphere using Schlenk type glassware or in a Braun single station dry-box equipped with a -40 °C fridge under a nitrogen atmosphere (Schlenk and Braun are trade marks).

Nuclear Magnetic Resonance (NMR) spectra were recorded on Varian XL-200, Varian VXR-300 or Bruker-500 MHz spectrometers (Varian and Bruker are trade marks). Chemical shifts (δ) are reported in parts per million and referenced to the residual protons in deuterated solvents. Coupling constants J_{AB} are reported in hertz (Hz). Solvents were P.A. grade and were dried over sodium wire, then distilled from the appropriate drying reagent (sodium benzophenone ketyl for ether and THF, sodium for hexane and toluene) under argon prior to use. Deuterated solvents were dried over 4 angstrom molecular sieves.

Binaphthol ligands were prepared according to methods described in J. Org. Chem. 1981, 46, 393; Bull. Chem. Soc. Japan 1988, 61, 2975; Tet. Lett. 1983, 24, 5611; J. Chem. Soc., C 1971, 1750 and J. Org. Chem. 1983, 48, 4948.

Zr(CH₂Ph)₂Cl₂ and M(CH₂Ph)₄ (M=Ti, Zr) were prepared according to the methods described in J. Organomet. Chem. 1981, 205, 319 and J. Organomet. Chem. 1971, 26, 357.

Melting points of the polymers were determined by Differential Scanning Calorimetry (DSC).

### Example 1

(1,1'-{2,2',3,3'-OC₁₀H₅SiMe₃}₂)ZrCl₂ -which corresponds to the compound of formula (I) wherein M=Zr, R^{a}=R^{b}=R^{c}=methyl and X¹=X²=Cl- was prepared as follows. 0.494 g (1.18 mmol) Zr(CH₂Ph)₂Cl₂ was dissolved in 5 ml toluene at 25 °C. To this solution was added 0.338 g (1.18 mmol) 3,3'-bis(trimethylsilyl)-1,1'-bi-2,2'-naphtol dissolved in 5 ml toluene. After stirring for 16 hours at 20 °C the toluene was removed in vacuo and the red-brown powder was washed with hexane. Recrystallization from an ether/hexane 1:1 mixture at -40 °C afforded a yellow powder. Yield: 0.383 g, corresponding to 73%.
¹H NMR (C₆D₆, 25 °C): δ 8.10 (s, 2H); 7.8-7.7 (d, 2H);7.2-6.95 (m, 4H); 6.86-6.75 (m, 2H); 0.70 (s, 18H, SiMe₃)
¹³C NMR (C₆D₆): δ 158.1; 135.7; 129.6; 128.4; 128.3; 128.2; 125.7; 124.7; 123.6; 111.4; -0.58 (SiMe₃) Analysis for C₂₆H₂₈O₂Si₂Cl₂Zr:
Calculated: C, 52.86; H, 4.78; Si, 9.51; Cl, 12.00; Zr, 15.44
Found: C, 53.12; H, 5.04; Si, 9.20; Cl, 11.86; Zr, 15.30

### Example 2

(1,1'-{2,2',3,3'-OC₁₀H₅SiMePh₂}₂)ZrCl₂ -which corresponds to the compound of formula (I) wherein M=Zr, R^{a}=methyl, R^{b}=R^{c}=phenyl and X¹=X²=Cl- was prepared in a similar manner as described in Example 1.
¹H NMR (C₆D₆, 25°C): δ 7.75 (br, 6H); 7.62 (d, 2H); 7.52 (d, 2H); 7.43 (m, 6H); 7.27 (m, 6H); 7.17 (t, 2H); 7.06 (t, 2H); 6.73 (d, 2H); 1.17 (s, 6H, Me)
Analysis for C₄₆H₃₆O₂Si₂Cl₂Zr:
Calculated: C, 65.76; H, 5.08; Si, 6.15; Cl, 7.76; Zr, 9.99
Found: C, 65.58; H, 5.14; Si, 6.19; Cl, 8.00; Zr, 10.10

### Example 3

(1,1'-{2,2',3,3'-OC₁₀H₅SiPh₃}₂)ZrCl₂ -which corresponds to the compound of formula (I) wherein M=Zr, R^{a}=R^{b}=R^{c}=phenyl and X¹=X²=Cl- was prepared in a similar manner as described in Example 1.
¹H NMR (C₆D₆/d⁸-THF, 25 °C): δ 8.07 (s, 2H); 8.0 (m, 12H); 7.35 (d, 2H); 7.25-7.15 (m, 18H); 7.35 (d, 2H); 6.86 (t, 2H, 7.7 Hz); 6.75 (t, 2H, 7.7 Hz)
¹³C NMR (C₆D₆): δ 160.2; 142.1; 137.1; 137.0; 135.5; 129.9; 129.8; 128.8; 127.4; 126.8; 124.5; 124.0; 117.9 Analysis for C₅₆H₄₀O₂Si₂Cl₂Zr:
Calculated: C, 69.47; H, 4.86; Si, 5.41; Cl, 6.48; Zr, 8.79
Found: C, 69.22; H, 5.04; Si, 5.30; Cl, 6.69; Zr, 8.61

### Example 4

(1,1'-{2,2',3,3'-OC₁₀H₅SiMe₃}₂)Ti(CH₂Ph)₂ -which corresponds to the compound of formula (I) wherein M=Ti, R^{a}=R^{b}=R^{c}=methyl and X¹=X²=benzyl- was prepared as follows.

To 0.153 g (0.371 mmol) Ti(CH₂Ph)₄ dissolved in 10 ml toluene and cooled to -40 °C was added 0.16 g (0.372 mmol) (HOC₁₀H₅SiMe₃)₂. The solution was allowed to warm to 20 °C with stirring and was stirred at this temperature for 15 hours. The toluene was removed in vacuum to afford a red oil, which was recrystallized to give the solid product.
¹H NMR (C₆D₆, 25 °C): δ 8.17 (s, 2H); 7.2-6.8 (m); 2.87 (2H, AB, CH₂); 2.35 (AB, 2H, CH₂); 0.48 (s, 18H, SiMe₃)

### Example 5

(1,1'-{2,2',3,3'-OC₁₀H₅SiMePh₂}₂)Zr(CH₂Ph)₂ -which corresponds to the compound of formula (I) wherein M=Zr, R^{a}=methyl, R^{b}=R^{c}=phenyl and X¹=X²=benzyl- was prepared analogous to Example 4 using Zr(CH₂Ph)₄.

### Example 6

(1,1'-{2,2',3,3'-OC₁₀H₅SiPh₃}₂)Ti(CH₂Ph)₂ -which corresponds to the compound of formula (I) wherein M=Ti, R^{a}=R^{b}=R^{c}=phenyl and X¹=X²=benzyl- was prepared analogous to Example 4.
¹H NMR (C₆D₆, 25 °C): δ 8.33 (s, 2H); 8.0-7.92 (m, 12H); 7.2-6.8 (m + C₆D₅H); 6.75 (m, 4H); 6.45 (m, 4H); 1.4 (AB, J_{AB} = 11 Hz, 2H, CH₂); 1.05 (AB, J_{AB} = 11 Hz, 2H, CH₂)
Analysis for C₇₀H₅₄O₂Si₂Ti:
Calculated: C, 81.53; H, 5.28; Ti, 4.64
Found: C, 81.24; H, 5.41; Ti, 4.75

### Example 7

(1,1'-{2,2',3,3'-OC₁₀H₅SiPh₃}₂)ZrMe₂(ether)₂ -which corresponds to the compound of formula (I) wherein M=Zr, R^{a}=R^{b}=R^{c}=phenyl and X¹=X²=methyl- was prepared as follows.
0.896 g (0.83 mmol) (C₁₁₀H₅OSiPh₃)₂ZrCl₂.toluene was suspended in 60 ml ether in a small Schlenk tube. This was cooled to -40 °C and 2 equivalents MeLi (1.04 ml of 1.6 M solution) in ether were added dropwise. After 10 minutes the orange suspension became a clear yellow solution and then began to turn cloudy. The solution was filtered, concentrated under vacuum and crystallized at -40 °C to give a white crystalline solid.
¹H NMR (C₆D₆, 25 °C): δ 8.28 (s, 2H); 7.92 (m); 7.53 (m); 7.16 (m); 6.97 (m); 3.14 (q, 8H, ether); 0.78 (t, 12H, ether); -0.136 (s, 6H, Me) 6.75 (t, 2H, 7.7 Hz)
¹³C NMR (C₆D₆): δ 159.86; 142.0 (d, 149 Hz); 138.2; 136.2; 129.3; 127.1; 125.8; 123.3; 118.2; naphthyl and phenyl resonances: 66.1 (t, 141 Hz, ether); 46.04 (q, 118 Hz, Me); 14.22 (q, 129 Hz, ether)
Analysis for C₅₆H₄₀O₂Si₂Cl₂Zr:
Calculated: C, 74.48; H, 5.21; Zr, 8.33
Found: C, 74.75; H, 5.32; Zr, 8.60; Li, 0.0; Cl<0.2

### Example 8

(1,1'-{2,2',3,3'-OC₁₀H₅SiPh₃}₂)Zr(CH₂Ph)₂ -which corresponds to the compound of formula (I) wherein M=Zr, R^{a}=R^{b}=R^{c}=phenyl and X¹=X²=benzyl- was prepared as follows.

To 0.795 g (1.74 mmol) Zr(CH₂Ph)₄ dissolved in 30 ml toluene was added 1.4 g (1.74 mmol) 3,3'-bis(triphenylsilyl)-1,1'-bi-2,2'-naphthol. After stirring for 16 hours at 20 °C the toluene was removed in vacuo. The resulting yellow oil was washed with hexane to give a yellow powder. Yield: 1.70 g, corresponding to 91%.
¹H NMR (CD₂Cl₂, 25 °C): δ 8.15 (s, 2H); 7.75 (d, 2H); 7.65 (m, 10H); 7.35 (m, 24H); 6.78 (d, 2H); 6.55 (m, 6H); 5.70 (d, 4H, benzyl Hₒ); 0.88 (AB, 2H, 9.8 Hz); 0.64 (AB, 2H, 9.8 Hz)
¹³C NMR (CD₂Cl₂): δ 157.7; 143.9; 138.9; 137.5; 137.1; 134.9; 130.9; 130.0; 129.9; 128.3; 128.1; 127.5; 127.1; 125.9; 124.6; 124.3; 116.1; 68.1 (t, CH₂, J_{CH} = 133 Hz)

### Example 9

(1,1'-{2,2',3,3'-OC₁₀H₅SiPh₃}₂)Zr(CH₂SiMe₃)₂ -which corresponds to the compound of formula (I) wherein M=Zr, R^{a}=R^{b}=R^{c}=phenyl and X¹=X²=methylene trimethyl silyl- was prepared analogous to Example 8.
¹H NMR (CD₂Cl₂, 25 °C): δ 8.35 (s, 2H); 8.0-7.92 (m, 12H); 7.2-6.8 (m + C₆D₅H); 7.15 (d, 2H); 0.5 (AB, 2H, CH₂); -0.50 (AB, 2H, CH₂); -0.4 (s, 18H, SiMe₃)
¹³C NMR (CD₂Cl₂): δ 156.0; 142.9; 137.3; 137.0; 130.1; 130.0; 128.8; 128.7; 128.4; 128.0; 127.0; 126.1; 124.4; 117.2 (phetyl and phenyl resonances); 67.6 (CH₂); 1.3 (SiMe₃)

### Example 10

### Ethene polymerization experiments

In table 1 ethene polymerization results for several titanium and zirconium compounds are listed. In each polymerization experiment the following conditions were applied:
- ethylene pressure: 300 kPa (3 bar)
- polymerization temperature: 20 °C, except for the catalyst of Example 4 where the polymerization temperature was 40 °C
- 0.02 mmol catalyst
- 5 mmol methylaluminoxane as a 10% solution in toluene
- 200 ml toluene
- polymerization time: 15-30 minutes.

**Table 1**

| Ethene polymerization | | | | | |
|---|---|---|---|---|---|
| Catalyst of | Rate (kg/g M/hr) | M_{W} | Mₙ | PD | m.p. (°C) |
| Example 1 | 8.5 | 2x10⁵ | 8300 | 24 | 125 |
| Example 2 | 2.3 | 3.6x10⁵ | 24000 | 15 | 120 |
| Example 3 | 3.3 | | | | 133 |
| Example 4 | 2.0 | 4.2x10⁵ | 39000 | 10.5 | 133 |
| Example 5 | 9.2 | | | | 133 |
| Example 9 | 0.53 | | | | |

In the above table M_{W} is weight average molecular weight, Mₙ is number molecular weight and PD stands for polydispersity and is equal to M_{W}/Mₙ. Molecular weight data were determined by GPC.
The melting point (m.p.) of the polyethylene obtained was determined by DSC.

### Example 11

### Propene polymerisation

The catalyst of Example 1 was also used for the polymerization of propene. At a polymerization temperature of 45 °C, a propene pressure of 600 kPa (6 bar) and a polymerization time of 60 minutes -all other conditions are equal to those applied during ethene polymerization- the following data were obtained.

| | |
|---|---|
| Rate | 0.43 (kg/g Zr/hr) |
| M_{w} | 1.2x10⁵ |
| Mₙ | 7600 |
| PD | 15.8 |

### Example 12

### Cyclic trimerisation of terminal acetylenes

To 0.02 mmol of the catalyst of Example 5 in 200 ml toluene were added 200 equivalents of HC≡CR at 20 °C, with R as defined in table 2. The trimerization was complete within 5 minutes at 20 °C. The same experiment was performed using the catalyst of Example 8. The results are listed in table 2.

**Table 2**

| Cyclic trimerization of HC≡CR | | |
|---|---|---|
| Catalyst of | R | Ratio 1,2,4:1,3,5 |
| Example 5 | SiMe₃ | 1 : 1 |
| (R¹=R²=SiMePh₂) | phenyl | 1 : 1 |
| | p-tolyl | 1 : 1 |
| Example 8 | SiMe₃ | 4 : 1 |
| (R¹=R²=SiPh₃) | phenyl | 4 : 1 |
| | p-tolyl | 4 : 1 |

From table 2 it is clear that the use of more bulky substituents R¹ and R² (SiPh₃ as compared to SiMePh₂) disfavour the formation of the 1,3,5-trisubstituted benzene.

### Example 13

### 1-hexene polymerisation

Ca. 2 x 10⁻⁵ mol catalyst was dissolved in 5 ml 1-hexene at 20 °C in the drybox. A ca. 100 fold excess of MAO was added as a solution in 3 ml toluene. The homogeneous solution formed was stirred for 16 h at 20 °C. The reaction vessel was then removed from the drybox and MeOH and then 1 M HCl added to destroy excess MAO. The toluene solution was decanted and evaporated. Identification of polyhexene was performed by ¹H and ¹³C NMR spectroscopy, and GPC analysis. The molar mass was determined by GPC. For NMR analysis the polymer was dissolved in CDCl₃. The endgroups were identified by APT experiments and fully coupled ¹³C NMR. DSC analysis (-40 °C " 100 °C) shows no T_{g} or Tₘ.

Table 3 lists the results of the hexene polymerization runs with reference to the catalysts mentioned hereinbefore.

**Table 3**

| 1-hexene polymerization | | |
|---|---|---|
| Catalyst of | Results | |
| Example 2 | polyhexene | Mw = 670000 P.D. = 2.23 |
| Example 5 | polyhexene | |
| Example 8 | polyhexene | |
| Example 6 | oligomers | |

### Example 14

### 1,3-butadiene polymerization

A 25 ml autoclave was charged with 2 x 10⁻⁵ mol catalyst, a 100 fold excess of MAO and 15 ml toluene. It was pressurized with 150 kPa (1.5 bar) butadiene at 20 °C. After 3 h the autoclave was opened and the excess MAO destroyed by addition MeOH and 1 M HCl. Decanting the organic layer and evaporating the solvents yielded polybutadiene as a rubber-like polymer. The structure was identified by ¹H and ¹³C NMR spectroscopy. The ratio between 1,2-methylene and 1,4-cis/trans units was determined by ¹H NMR spectroscopy. To dissolve the polymer it was refluxed in C₂D₂Cl₄ for 1 h under an inert atmosphere. 1,2-methylene units resonate at 4.8 and 1.3 ppm, 1,4-trans units at 1.98 and 5.4 ppm, and 1,4-cis units at 5.32 and 2.03 ppm. The ratio can be calculated from the integral of the individual peaks. E.R. Santee, Jr., R. Chang and M. Morton Polymer Lett. Ed. 1973, 11, 453.

Table 4 lists the results of the butadiene polymerization runs referring to the catalysts mentioned before.

**Table 4**

| Butadiene polymerization | | |
|---|---|---|
| Catalyst of | Results | |
| Example 2 | polybutadiene | no 1,2-vinyl, cis/trans-1,4 |
| Example 5 | polybutadiene | |
| Example 8 | polybutadiene | no 1,2-vinyl, 50/50 cis/trans-1,4 |
| Example 6 | polybutadiene | 7% 1,2-vinyl, 7% trans-1,4, 81% cis-1,4 |

## Claims

1. Compound of the general formula (I): 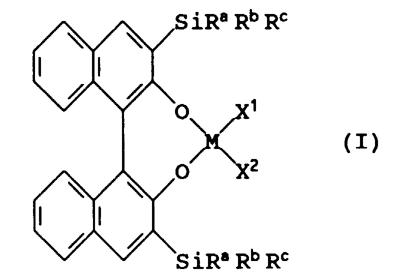 wherein:
- M is Ti or Zr;
- X¹ and X² independently represent halogen, an optionally substituted aliphatic or aromatic hydrocarbon group of 1 to 20 carbon atoms, a silyl group or an alkoxy group of general formula -OR' with R' being an aliphatic or aromatic hydrocarbon group of 1 to 20 carbon atoms; and
- R^{a}, R^{b} and R^{c} independently represent methyl, an aryl group, an arylalkyl group or an alkylaryl group.

2. Compound according to claim 1, wherein X¹ and X² are selected from the group consisting of chlorine, benzyl, methylene trimethyl silyl and methyl.

3. Compound according to claim 1 or 2, wherein R^{a}, R^{b} and R^{c} are selected from methyl and phenyl.

4. Compound according to any one of claims 1 to 3, wherein:
M=Zr or Ti, R^{a}=R^{b}=R^{c}=independently methyl or phenyl and X¹=X²=Cl or benzyl or methyl.

5. Compound according to any one of claims 1 to 3, wherein:
M=Zr, R^{a}=R^{b}=R^{c}=phenyl and X¹=X²=methylene trimethyl silyl.

6. A process for the polymerization or oligomerization of olefinically or acetylenically unsaturated hydrocarbons in the presence of a homogeneous catalyst comprising a compound according to any one of claims 1-5.

7. A process according to claim 6, wherein the unsaturated hydrocarbon is ethene or propene and the polymerization is effected in the presence of an organo aluminium cocatalyst.

8. A process according to claim 6, comprising the cyclic trimerization of a terminal acetylene having the formula (IV):
H-C≡C-R (IV)
wherein R represents a hydrocarbyl silyl group, an optionally substituted aryl group or an alkyl group of 1 to 20 carbon atoms other than a tertiary alkyl.

## Patentansprüche

1. Verbindung der allgemeinen Formel (I): 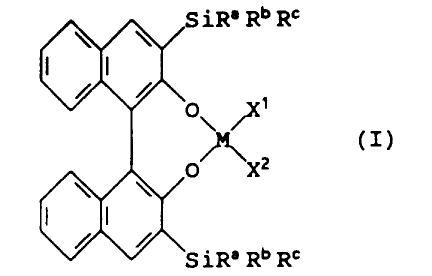 worin:
- M Ti oder Zr,
- X¹ und X² unabhängig voneinander Halogen, eine gegebenenfalls substituierte aliphatische oder aromatische Kohlenwasserstoffgruppe mit 1 bis 20 Kohlenstoffatomen, eine Silylgruppe oder eine Alkoxygruppe der allgemeinen Formel -OR', wobei R' eine aliphatische oder aromatische Kohlenwasserstoffgruppe mit 1 bis 20 Kohlenstoffatomen bedeutet und
- R^{a}, R^{b} und R^{c} unabhängig voneinander Methyl, eine Arylgruppe, eine Arylalkylgruppe oder eine Alkylarylgruppe bedeuten.

2. Verbindung nach Anspruch 1, worin X¹ und X² aus der Gruppe bestehend aus Chlor, Benzyl, Methylentrimethylsilyl und Methyl ausgewählt sind.

3. Verbindung nach Anspruch 1 oder 2, worin R^{a}, R^{b} und R^{c} unter Methyl und Phenyl ausgewählt sind.

4. Verbindung nach einem der Ansprüche 1 bis 3, worin:
M = Zr oder Ti, R^{a} = R^{b} = R^{c} = unabhängig voneinander Methyl oder Phenyl und X¹ = X² = Cl, Benzyl oder Methyl.

5. Verbindung nach einem der Ansprüche 1 bis 3, worin:
M = Zr, R^{a} = R^{b} = R^{c} = Phenyl und X¹ = X² = Methylentrimethylsilyl.

6. Verfahren zur Polymerisation oder Oligomerisation von olefinisch oder acetylenisch ungesättigten Kohlenwasserstoffen in Gegenwart eines Homogenkatalysators, der eine Verbindung gemäß einem der Ansprüche 1-5 enthält.

7. Verfahren nach Anspruch 6, bei dem man als ungesättigten Kohlenwasserstoff Ethen oder Propen einsetzt und die Polymerisation in Gegenwart eines Organoaluminium-Cokatalysators durchführt.

8. Verfahren nach Anspruch 6, bei dem man ein Acetylen mit endständiger Dreifachbindung der Formel (IV):
H-C≡C-R (IV)
worin R eine Kohlenwasserstoffsilylgruppe, eine gegebenenfalls substituierte Arylgruppe oder eine Alkylgruppe mit 1 bis 20 Kohlenstoffatomen mit Ausnahme von tert.-Alkyl bedeutet, cyclotrimerisiert.

## Revendications

1. Composé de formule générale (I): 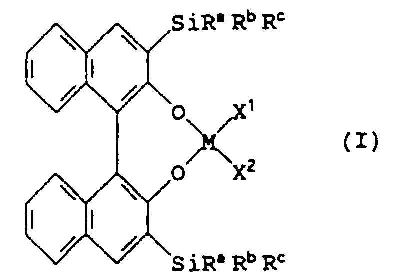 dans laquelle:
- M est Ti ou Zr;
- X¹ et X² représentent indépendamment un halogène, un groupe hydrocarbure aliphatique ou aromatique éventuellement substitué de 1 à 20 atomes de carbone, un groupe silyle ou un groupe alcoxy de formule générale -OR', R' étant un groupe hydrocarbure aliphatique ou aromatique de 1 à 20 atomes de carbone; et
- R^{a}, R^{b} et R^{c} représentent indépendamment un méthyle, un groupe aryle, un groupe arylalkyle ou un groupe alkaylaryle.

2. Composé selon la revendication 1, dans lequel X¹ et X² sont choisis parmi le groupe constitué du chlore, du benzyle, du méthylènetriméthylsilyle et du méthyle.

3. Composé selon la revendication 1 ou 2, dans lequel R^{a}, R^{b} et R^{c} sont choisis parmi le méthyle et le phényle.

4. Composé selon l'une quelconque des revendications 1 à 3, dans lequel:
M=Zr ou Ti, R^{a}=R^{b}=R^{c}=indépendamment méthyle ou phényle et X¹=X²=Cl ou benzyle ou méthyle.

5. Composé selon l'une quelconque des revendications 1 à 3, dans lequel:
M=Zr, R^{a}=R^{b}=R^{c}=phényle et X¹=X²=méthylènetriméthylsilyle.

6. Procédé de polymérisation ou d'oligomérisation d'hydrocarbures insaturés oléfiniquement ou acétyléniquement en présence d'un catalyseur homogène comprenant un composé selon l'une quelconque des revendications 1-5.

7. Procédé selon la revendication 6, dans lequel l'hydrocarbure insaturé est l'éthène ou le propène et la polymérisation est effectuée en présence d'un cocatalyseur organoaluminium.

8. Procédé selon la revendication 6, comprenant la trimérisation cyclique d'un acétylène terminal ayant la formule (IV):
H-C≡C-R (IV)
dans laquelle R représente un groupe hydrocarbylsilyle, un groupe aryle éventuellement substitué ou un groupe alkyle de 1 à 20 atomes de carbone autre qu'un alkyle tertiaire.
